# EUROPÄISCHE PATENTSCHRIFT

(11) **EP 0 759 157 B1**
(45) Veröffentlichungstag und Bekanntmachung des Hinweises auf die Patenterteilung: **07.07.1999**
(21) Anmeldenummer: 95918590.1
(22) Anmeldetag: 22.04.1995
(51) Int. Cl.: G01N 15/00, A47L 9/28

(54) **VERFAHREN ZUM NACHWEIS VON PARTIKELN IN EINER 2-PHASEN-STRÖMUNG, VERWENDUNG DES VERFAHRENS UND STAUBSAUGER**
METHOD OF DETECTING PARTICLES IN A TWO-PHASE STREAM, USE OF SUCH METHOD AND A VACUUM CLEANER
PROCEDE DE DETECTION DE PARTICULES DANS UN ECOULEMENT DIPHASIQUE, UTILISATION D' UN TELLE METHODE ET D'UN ASPIRATEUR

(30) Priorität: 10.05.1994 DE 4416428; 16.07.1994 DE 4425291
(43) Veröffentlichungstag der Anmeldung: 26.02.1997
(73) Patentinhaber: Iglseder, Heinrich, 42897 Lennep (DE)
(72) Erfinder: Iglseder, Heinrich, 42897 Lennep (DE)
(74) Vertreter: Möller, Friedrich, Dipl.-Ing.
(86) Internationale Anmeldenummer: EP9501529
(87) Internationale Veröffentlichungsnummer: WO9530887

(56) Entgegenhaltungen:
- GB-A- 2 225 933
- US-A- 3 989 311
- US-A- 4 114 557
- US-A- 5 070 722

## Beschreibung

Die Erfindung betrifft ein Verfahren zum Nachweis von Partikeln in einer 2-Phasen-Strömung gemäß dem Oberbegriff des Anspruchs 1. Desweiteren betrifft die Erfindung eine Verwendung des Verfahren sowie einen Staubsauger gemäß dem Oberbegriff des Anspruchs 10.

Im Sinne der Erfindung sollen unter Staubsaugern sämtliche Staubsaugeinrichtungen verstanden werden, so z.B. von Hand betätigbare Hausstaubsauger, selbsttätig verfahrbare Staubsaug-Roboter für Reinsträume sowie zentrale Staubsauganlagen, die eine zentrale Maschinenvorrichtung sowie ein Leitungssystem zur Verbindung der zentralen Maschinenvorrichtung mit einer Saugeinrichtung aufweisen.

Der Nachweis von Partikeln in 2-Phasen-Strömungen, insbesondere der Nachweis von Staub in Luft, ist für viele industrielle Herstellungsverfahren oder Integrationsmethoden wichtig. So müssen z.B. die sensiblen Herstellungsverfahren der Halbleiter-Technologie sowie die Integrationsmethoden der Raumfahrttechnik unter staubfreien Bedingungen, so z.B. in Reinsträumen, durchgeführt werden. Eine wichtige Voraussetzung zur Gewährleistung staubfreier Bedingungen ist der eindeutige Nachweis der Partikel hinsichtlich Art und Anzahl in einem vorgegebenen Volumen. Hierzu werden Vorrichtungen eingesetzt, die mit optischen Nachweismethoden arbeiten. Die optischen Nachweismethoden verfügen jedoch über eine geringe Auflösung und sind darüber hinaus sehr anfällig.

Aus GB-A-2 225 933 sind ein Verfahren und ein Staubsauger der gattungsbildenden Art bekannt.

Ausgehend von diesem Stand der Technik liegt der vorliegenden Erfindung die Aufgabe zugrunde, ein einfaches und zuverlässiges Verfahren zum Nachweis von Partikeln in einer 2-Phasen-Strömung und eine Verwendung des Verfahrens zu schaffen. Desweiteren soll ein Staubsauger geschaffen werden, der den eindeutigen Nachweis von Staubpartikeln und deren Konzentration ermöglicht.

Zur Lösung dieser Aufgabe weist das erfindungsgemäße Verfahren zum Nachweis von Partikeln in einer 2-Phasen-Strömung die Merkmale des Anspruchs 1 auf. Unter Ausnutzung des piezoelektrischen Effekts lassen sich Partikel in 2-Phasen-Strömungen, insbesondere Staubpartikel in Luft, hinsichtlich Art und Anzahl einfach nachweisen und wiedergeben.
Vorzugsweise wird das vom piezoelektrischen Sensor erzeugte Signals vor der Wiedergabe aufbereitet, insbesondere gefiltert. Dies hat den Vorteil, daß sich Störungen des Signals, so z.B. Meßrauschen, beseitigen lassen. Die Genauigkeit des Verfahrens wird erhöht.

Eine beforzugte Verwendung des Verfahrens weist die Merkmale des Anspruchs 9 auf. Damit ist es möglich, die Saugleistung des Staubsaugers an den Reinheitsgrad des Fußbodens oder Teppichs anzupassen.

Vorzugsweise wird das Signal zur Steuerung oder Regelung der Motorleistung des Staubsaugers verwendet. Dies hat den Vorteil, daß sich der Energieverbrauch des Staubsaugers sowie die von ihm ausgehende Geräuschbelästigung verringern lassen.

Der erfindungsgemäße Staubsauger weist die Merkmals des Anspruchs 10 auf. Er ermöglicht den einfachen und robusten Nachweis der aufgesaugten Partikel.

Vorzugsweise ist der piezoelektrische Sensor in einem Strömungsweg schräg zu einer Strömungsrichtung der Luft angeordnet. Dies hat den Vorteil, daß die Strömung die auf den piezoelektrischen Sensor auftreffenden Partikel wieder ablöst und somit stets ein Selbstreinigungseffekt des piezoelektrischen Sensors bewirkt wird.

Nach einer vorteilhaften Weiterbildung des erfindungsgemäßen Staubsaugers ist der piezoelektrische Sensor in einer Einschnürung des Strömungswegs angeordnet. Bedingt durch die Einschnürung wird die Strömungsgeschwindigkeit der 2-Phasen-Strömung erhöht. Die Partikel treffen demzufolge mit einer höheren Geschwindigkeit auf den piezoelektrischen Sensor auf. Die Empfindlichkeit bzw. Auflösung des piezoelektrischen Sensors läßt sich demzufolge steigern.

Bevorzugte Weiterbildungen der Erfindung ergeben sich aus den Unteransprüchen und der Beschreibung. Nachfolgend werden Ausführungsbeispiele der Erfindung anhand der Zeichnung näher erläutert. In der Zeichnung zeigen:
- Fig.1: eine Anordnung eines piezoelektrischen Sensors in einem Strömungsweg nach einem ersten Ausführungsbeispiel der Erfindung im Querschnitt,
- Fig. 2: eine Anordnung eines piezoelektrischen Sensors in einem Strömungsweg nach einem zweiten Ausführungsbeispiel der Erfindung in einer Ansicht analog zu Fig. 1,
- Fig. 3: ein Blockschaltbild einer Meßschaltung zur Aufbereitung und Wiedergabe eines von dem piezoelektrischen Sensor erzeugten Signals, und
- Fig. 4: die Meßschaltung der Fig. 3 im Detail.

Die hier gezeigten Vorrichtungen bzw. Meßschaltungen dienen dem Nachweis von Staubpartikeln in Luft. Einsatz finden diese Vorrichtungen bzw. Meßschaltungen u.a. bei Hausstaubsaugern.

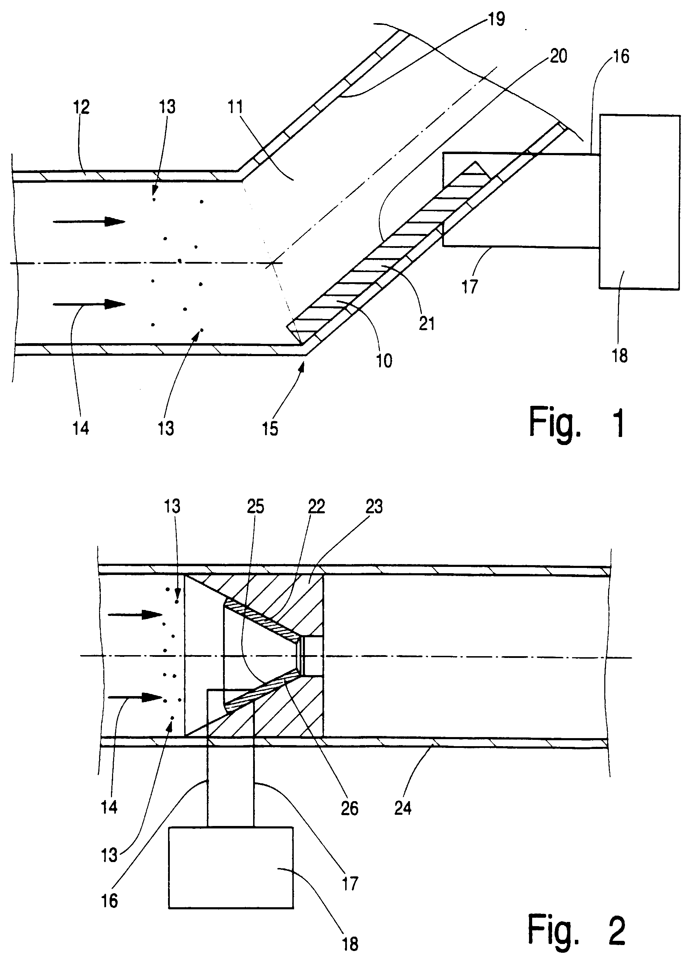

Fig. 1 zeigt einen piezoelektrischen Sensor 10, der in einem Strömungsweg 11 einer 2-Phasen-Strömung angeordnet ist. Der Strömungsweg 11 wird durch ein Ansaugrohr 12 bzw. einen Ansaugstutzen eines nicht dargestellten Staubsaugers bestimmt.

Die 2-Phasen-Strömung, nämlich ein Gemisch aus Staubpartikeln 13 und Luft, wird durch die Saugleistung des Staubsaugers in einer durch einen Pfeil 14 bestimmten Strömungsrichtung durch das Ansaugrohr 13 bewegt. Die mit einer Strömungsgeschwindigkeit durch das Ansaugrohr 12 bewegten Staubpartikel 13 einer Masse m treffen im Bereich einer Rohrkrümmung 15 auf den dort angeordneten piezoelektrischen Sensor 10. Beim Auftreffen der Staubpartikel 13 auf den piezoelektrischen Sensor 10 geben dieselben einen Teil ihrer Bewegungsenergie an den piezoelektrischen Sensor 10 ab. Die Bewegungsenergie der Staubpartikel 13 wandelt der piezoelektrische Sensor 10 in ein entsprechendes elektrisches Signal, nämlich eine Piezospannung, um. Dieses Signal wird über Leitungen 16, 17 am piezoelektrischen Sensor 10 abgegriffen und einer Meßschaltung 18 zugeführt.

Der piezoelektrische Sensor 10 ist im Bereich der Rohrkrümmung 15 im Ansaugrohr 12 angeordnet. Der piezoelektrische Sensor 10 ist hierbei auf einer Innenwandung 19 des Ansaugrohrs 12 befestigt. Demnach ist der piezoelektrische Sensor im Strömungsweg 11 schräg zu der durch den Pfeil 14 angedeuteten Strömungsrichtung angeordnet. Eine Oberfläche 20 des piezoelektrischen Sensors 10 und die durch den Pfeil 14 angedeutete Strömungsrichtung schließen einen Winkel von ca. 5° bis 80°, vorzugsweise 30 °, ein. Dadurch wird eine stetige Reinigung der Oberfläche 20 des piezoelektrischen Sensors 10 bewirkt.

Der piezoelektrische Sensor 10 ist als ein Kristall 21 ausgebildet. Der Kristall 21 ist derart im Strömungsweg 11 angeordnet, daß eine polare elektrische Achse des Kristalls 21 in Strömungsrichtung weist. Dadurch können die Staubpartikel 13 den piezoelektrischen Sensor 10 bzw. das Kristall 21 in der Achse seiner größten Empfindlichkeit anregen.

Darüberhinaus kommen als geeignete Materialien für den piezoelektrischen Sensor 10 Keramik, Kunststoff sowie Polymer infrage.

Der piezoelektrische Sensor 10 ist desweiteren derart im Ansaugrohr 12 angeordnet bzw. er verfügt über eine derartige Abmessung, daß von ihm der gesamte Querschnitt der 2-Phasen-Strömung erfaßt wird. Demzufolge werden alle in der 2-Phasen-Strömung enthaltenen Partikel 13 vom piezoelektrischen Sensor 10 erfaßt.

Eine alternative Anordnung eines piezoelektrischen Sensors 22 in einer 2-Phasen-Strömung zeigt Fig. 2. Der piezoelektrische Sensor 22 ist hierbei in einer Einschnürung 23 eines Ansaugrohrs 24 eines nicht dargestellten Staubsauger angeordnet. Im Bereich der Einschnürung 23 wird die Strömungsgeschwindigkeit der 2-Phasen-Strömung erhöht. Die Staubpartikel 13 treffen demzufolge mit einer erhöhten Geschwindigkeit auf den piezoelektrischen Sensor 22 auf. Dadurch wird die Empfindlichkeit bzw. Auflösung des piezoelektrischen Sensors 22 erhöht.

Eine Oberfläche 24 des piezoelektrischen Sensors 22 ist schräg zu der durch den Pfeil 14 angedeuteten Strömungsrichtung der 2-Phasen-Strömung angeordnet. Der piezoelektrische Sensor 22 ist hierbei als eine Folie 26 ausgebildet, die auf einer Mantelfläche 27 der Einschnürung 23 angeordnet ist. Der piezoelektrische Sensor 22 verfügt über eine derartige Abmessung, daß nur ein Teil des Querschnitts der 2-Phasen-Strömung von demselben erfaßbar ist. In der Meßschaltung 18 erfolgt dann eine entsprechende Hochrechnung auf den Gesamtquerschnitt der 2-Phasen-Strömung.

Vorzugsweise ist der piezoelektrische Sensor 10, 22 mit einer nicht dargestellten Schutzschicht überzogen. Die Schutzschicht verlangsamt die Alterung des piezoelektrischen Sensors 10 infolge hoher Belastung und erhöht somit die Standzeit.

Desweiteren kann der piezoelektrische Sensor 10, 22 vorgespannt im Ansaugrohr 12 bzw. 24 angeordnet sein. Zwischen piezoelektrischem Sensor 10, 22 und Ansaugrohr 12, 24 ist dann eine elastische Zwischenschicht vorgesehen, mit der die Abklingzeit des piezoelektrischen Sensors 10, 22 verringert werden kann.

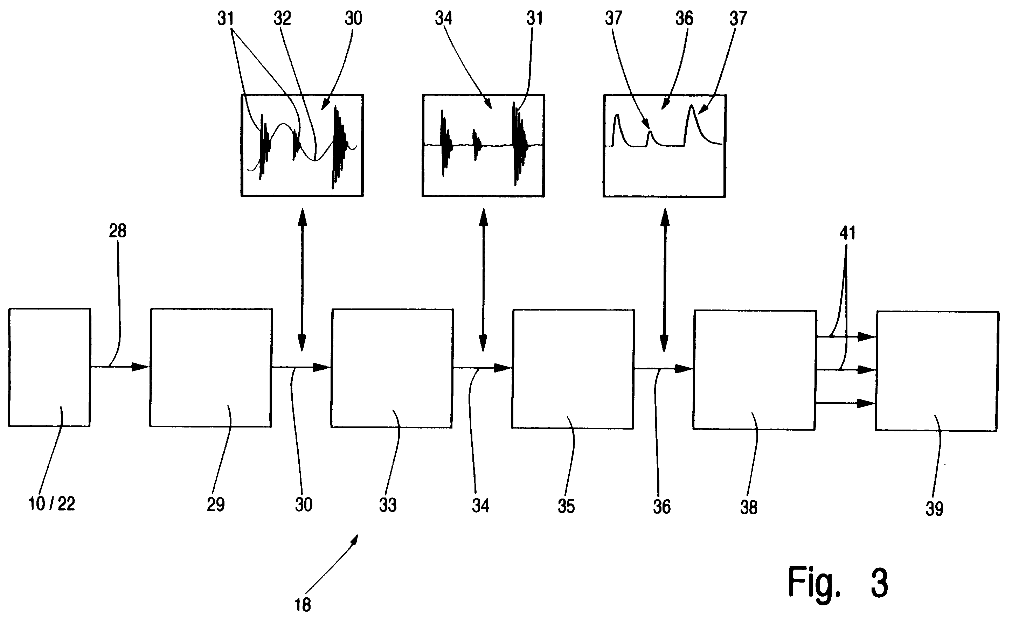

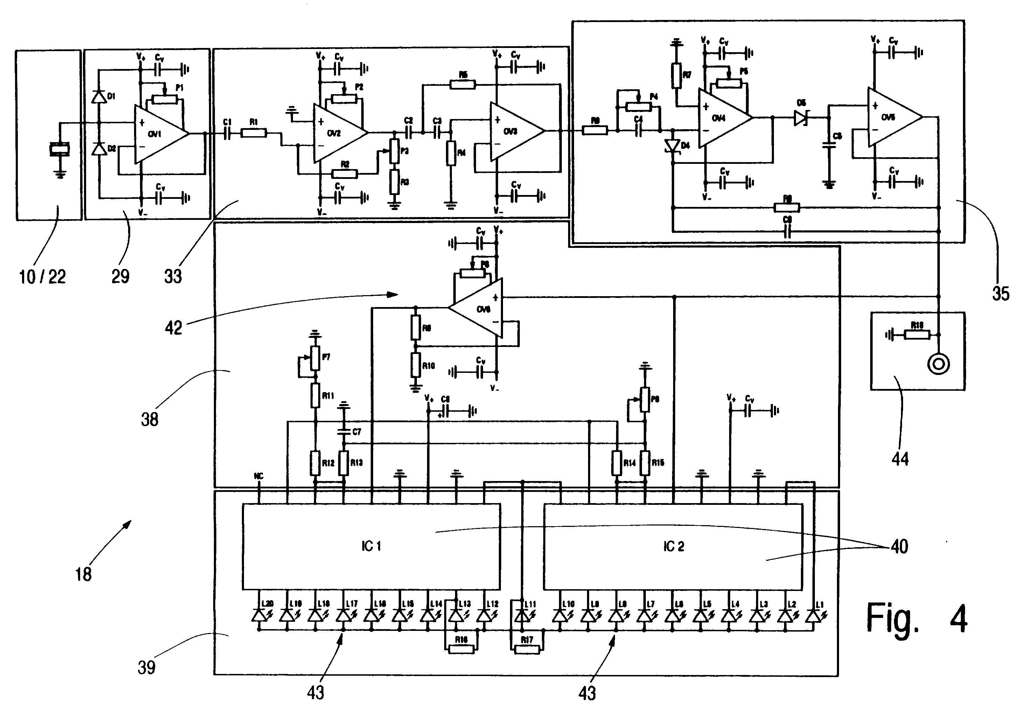

Die Maßschaltung 18 zur Aufbereitung und Wiedergabe des von dem piezoelektrischen Sensor 10, 22 erzeugten Signals zeigen Fig. 3, 4.

Die Staubpartikel 13 erzeugen beim Auftreffen auf den piezoelektrischen Sensor 10, 22 ein Ladungssignal 28. Das Ladungssignal 28 ist abhängig von der Bewegungsenergie der Staubpartikel 13. Zur Verlängerung der Standzeit bzw. Zugriffszeit auf das Ladungssignal 28 wird dieses einem Impedanzwandler bzw. Spannungsfolger 29 mit einem Verstärkungsfaktor von etwa 1 zugeführt. Das Ladungssignal 28 wird demnach in ein zeitlich gedehntes Folgesignal 30 umgewandelt. Das Folgesignal 30 enthält neben den durch die Staubpartikel 13 erzeugten hochfrequenten Meßsignalen 31 zusätzlich niederfrequente Störsignale 32. Die niederfrequenten Störsignale 32 werden aus dem Folgesignal 30 durch einen Filter, nämlich einen Hochpaß 33, beseitigt. Der Hochpaß 33 ist dem Spannungsfolger 29 nachgeordnet. Der Hochpaß 33 erzeugt aus dem Folgesignal 30 ein Filtersignal 34, das lediglich die gewünschten Meßsignale 31 enthält.

Die Schwingungsfrequenz der Meßsignalge 31 bewegt sich in der Regel oberhalb von 100 kHz. Die Schwingungsfrequenz der Störsignale 32 liegt in der Regel um 20 kHz. Demzufolge wird ein Hochpaß 33 eingesetzt, dessen Grenzfrequenz bei näherungsweise 50 kHz liegt. Die Störsignale 32 lassen sich mit dem Hochpaß auf einfache Weise aus dem Folgesignal 30 ausfiltern.

Anschließend an die Filterung des Folgesignals 30 wird das so erzeugte Filtersignal 34 einer Spitzenwertbestimmung unterzogen. Hierzu ist dem Hochpaß 33 ein Spitzenwertmesser 35 nachgeordnet. Der Spitzenwertmesser 35 erzeugt aus dem Filtersignal 34 ein Spitzenwertsignal 36. Mit Hilfe der Spitzenwertbestimmung läßt sich die Bewegungsenergie der Staubpartikel 13 messen bzw. kalibrieren. Kalibriermessungen haben ergaben, daß sich eine maximale Piezospannung 37 exponentiell zur Bewegungsenergie der Staubpartikel 13 verhält.

Das Spitzenwertsignal 36 wird einer Meßbereichsschaltung bzw. Selektionsschaltung 38 und darauffolgend einer Wiedergabeeinrichtung 39 mit integrierter Anzeigenelektronik 40 zugeführt. Die Wiedergabeeinrichtung 39 ermöglicht eine optische, akustische und/oder fühlbare Wiedergabe der ermittelten Staubpartikel 13.

Durch die Selektionsschaltung 38 wird das Spitzenwertsignal 36 in verschiedene Eingangssignale 41 für die Wiedergabeeinrichtung 39 umgewandelt. Hierbei wird das Spitzenwertsignal 36 unterschiedlichen, einstellbaren Empfindlichkeitsbereichen bzw. Meßbereichsgrenzen zugeordnet. Die Empfindlich- keitsbereiche bzw Meßbereichsgrenzen sind logarithmisch gestaffelt. Demzufolge enthält die Selektionsschaltung mindestens einen Verstärker 42.

Die Wiedergabeeinrichtung 39 verfügt über optische Anzeigen 43 sowie nicht dargestellte akustische und fühlbare Wiedergabeelemente.

Als optische Anzeigen 43 werden mehrstellige Leuchtdioden-Anzeigen verwendet. Jedem LED ist ein eigener Meßbereich zugeordnet. Der Nachweis eines einem Meßbereich zugeordneten Staubpartikels 13 wird durch kurzes Aufleuchten des entsprechenden LEDs signalisiert. Sind Form und Dichte des Staubpartikels 13 bekannt und ist desweiteren die Strömungsgeschwindigkeit vorgegeben, so läßt sich direkt auf die Größe des Staubpartikels 13 schließen. Dementsprechend kann jedem Meßbereich ein unterschiedlicher Bereich der Größe der Staubpartikel 13 zugeordnet werden.

Zusätzlich ist jedem LED ein nicht dargestellter Zähler mit vielstelliger, numerischer Anzeige zugeordnet. Mit einem oder mehreren Zählern wird die Gesamtanzahl der Staubpartikel 13 pro Meßbereich bzw. insgesamt bestimmt. Demzufolge läßt sich eine Verteilung der Staubpartikel 13 anzeigen.

Desweiteren verfügt die Wiedergabeeinrichtung 39 über die nicht dargestellten akustischen Wiedergabeelemente. Die akustische Wiedergabe weist den Vorteil auf, daß höhere Auflösungsgrenzen realisierbar sind. Mit der akustischen Wiedergabe der detektierten Staubpartikel 13 läßt sich eine Auflösungsgrenze bis 10.000 Teilchen pro Sekunde realisieren.

Mit Hilfe der akustischen Wiedergabeelemente läßt sich neben der Anzahl und Größe der nachgewiesenen Staubpartikel 13 auch deren Materialeigenschaft wiedergeben. Die Frequenz der Meßsignale 31 ist ein Kriterium für die Materialeigenschaft des Staubpartikels 13. Untersuchungen haben gezeigt, daß bei harten Staubpartikeln 13 eine hohe Frequenz und bei weichen Staubpartikeln 13 eine geringe Frequenz der Meßsignale 31 festzustellen ist. Für weiche Staubpartikel 13 ist ein dumpfer Ton, für harte Staubpartikel 13 ein hoher Ton der akustischen Wiedergabe vorgesehen. Große Staubpartikel 13 werden mit einem lauten und kleine Staubpartikel 13 mit einem leisen Ton wiedergegeben. Die Anzahl der wahrgenommenen Staubpartikel 13 wird durch die Frequenz der akustischen Signale wiedergegeben.

Desweiteren ist der Wiedergabeeinrichtung 39 ein nicht dargestelltes, fühlbares Wiedergabeelement zugeordnet. Mit Hilfe einer solchen Tasteinheit werden die Meßsignale 31 in mechanische Vibrationen bzw. Pulse umgewandelt.

Zusätzlich verfügt die Meßschaltung 18 über einen Anschluß 44 für ein Oszilloskop oder dergleichen, mit dem die ermittelten Spitzenwertsignale 36 direkt angezeigt werden können.

Neben der bloßen Wiedergabe der ermittelten Staubpartikel 13 können die Meßsignale 31 zur Steuerung oder Regelung des Staubsaugers verwendet werden. Die Saugleistung des Staubsaugers wird in Abhängigkeit der Anzahl der detektierten Staubpartikel 13 geregelt bzw. gesteuert. Bei einer geringen Anzahl von Staubpartikeln 13 wird die Saugleistung des Staubsaugers gedrosselt, nämlich seine Motorleistung verringert.

## Patentansprüche

1. Verfahren zum Nachweis von Partikeln einer 2-Phasen-Strömung, insbesondere zum Nachweis von Staub in Luft, wobei ein piezoelektrischer Sensor (10, 22) mindestens von einem Teil der 2-Phasen-Strömung beaufschlagt wird und ein von Anzahl und/oder Art der nachzuweisenden Partikel abhängiges Signal (28) erzeugt wird, dadurch gekennzeichnet, daß der piezoelektrische Sensor (10, 22) sich innerhalb eines Ansaugrohrs (12, 24) befindet, derart, daß der piezoelektrische Sensor (10, 22) direkt von den Partikeln beaufschlagt wird und dabei die Partikel mindestens einen Teil ihrer Bewegungsenergie an den piezoelektrischen Sensor (10, 22) abgeben.

2. Verfahren nach Anspruch 1, dadurch gekennzeichnet, daß das erzeugte Signal optisch und/oder akustisch und/oder fühlbar wiedergegeben wird.

3. Verfahren nach Anspruch 1 oder 2, dadurch gekennzeichnet, daß das Signal vor der Wiedergabe aufbereitet wird.

4. Verfahren nach einem der Ansprüche 1 bis 3, dadurch gekennzeichnet, daß das Signal zur Beseitigung von Störsignalen (32), insbesondere zur Beseitigung eines Meßrauschens, gefiltert wird (34).

5. Verfahren nach einem der Ansprüche 1 bis 4, dadurch gekennzeichnet, daß das Filtersignal (34) in ein Spitzenwertsignal (36) umgewandelt wird und daß dieses zur qualitativen und/oder quantitativen Anzeige einer Wiedergabeeinrichtung (39) zugeführt wird.

6. Verfahren nach einem oder mehreren der Ansprüche 1 bis 5, dadurch gekennzeichnet, daß das Ladungssignal (28) des piezoelektrischen Sensors (10, 22) zur Verlängerung der Standzeit bzw. Zugriffszeit einem Spannungsfolger (29) zugeführt wird.

7. Verfahren nach Anspruch 2, dadurch gekennzeichnet, daß das Signal zur Steuerung oder Regelung der Motorleistung des Staubsaugers verwendet wird.

8. Verfahren nach Anspruch 6, dadurch gekennzeichnet, daß das Ladungssignal (28) zur Beseitigung von Störsignalen (32) gefiltert wird (34), darauffolgend das Filtersignal (34) in ein Spitzenwertsignal (36) umgewandelt wird und daß dieses zur Steuerung oder Regelung des Staubsaugers verwendet wird.

9. Verwendung des Verfahrens gemäß Anspruch 1 zur Steuerung oder Regelung der Saugleistung eines Staubsaugers.

10. Staubsauger mit mindestens einem piezoelektrischen Sensor (10, 22) und mit mindestens einer Wiedergabeeinrichtung (39) zur qualitativen und/oder quantitativen Wiedergabe eines vom piezoelektrischen Sensor (10, 22) erzeugten Signals (28), dadurch gekennzeichnet, daß der piezoelektrische Sensor (10, 22) innerhalb eines Ansaugrohrs (12, 24) angeordnet und mindestens von einem Teil einer 2-Phasen-Strömung beaufschlagbar ist und eine elastische Zwischenschicht zwischen dem piezoelektrischen Sensor (10, 22) und dem Ansaugrohr (12, 24) angeordnet ist.

11. Staubsauger nach Anspruch 10, dadurch gekennzeichnet, daß der piezoelektrische Sensor (10, 22) im Ansaugrohr (12, 24) schräg zur Strömungsrichtung (14) angeordnet ist.

12. Staubsauger nach Anspruch 10 oder 11, dadurch gekennzeichnet, daß der piezoelektrische Sensor (10, 22) in einer Einschnürung (23) des Ansaugrohrs (12, 24) angeordnet ist.

13. Staubsauger nach einem der Ansprüche 10 bis 12, dadurch gekennzeichnet, daß der piezoelektrische Sensor (10, 22) als Folie (26) ausgebildet ist.

14. Staubsauger nach einem der Ansprüche 10 bis 13, dadurch gekennzeichnet, daß der piezoelektrische Sensor (10, 22) als Kristall (21) ausgebildet ist.

15. Staubsauger nach einem der Ansprüche 10 bis 14, gekennzeichnet durch eine Meßschaltung (18) zur Aufbereitung des Signals (28).

16. Staubsauger nach Anspruch 15, dadurch gekennzeichnet, daß die Meßschaltung (18) einen Hochpaß (33) zur Filterung des Ladungssignals (28) sowie einen Spitzenwertmesser (35) zur Bestimmung eines Spitzenwertsignals (36) aufweist.

17. Staubsauger nach einem der Ansprüche 10 bis 16, gekennzeichnet durch eine in Abhängigkeit vom Ladungssignal (28) steuerbare Saugleistung.

## Claims

1. Method for detecting particles in a two-phase-flow, in particular for detecting dust or soil in air, by means of a piezo-electric transducer (10, 22) directly exposed to at least one part of a two-phase-flow and generating a signal (28) depending on the number and/or type of the particles to be detected, wherein the piezo-electric transducer (10, 22) is located on the interior of a suction duct (12, 24) in such a manner that the piezo-electric transducer (10, 22) is directly exposed to the impacting particles which transfer at least part of their kinetic energy to the piezo-electric transducer (10, 22).

2. Method according to claim 1, wherein the generated signal is indicated optically and/or acoustically and/or tangibly.

3. Method according to claim 1 or 2, wherein the signal is processed before being indicated.

4. Method according to claims 1 to 3, wherein the signal (34) to eliminate interferences, particularly to eliminate noise signals is filtered.

5. Method according to claims 1 to 4, wherein the filtered signal (34) is converted to a peak signal (36) which is fed to an indicating device (39) for qualitative and/or quantitative display.

6. Method according to one or several of claims 1 to 5, wherein the charge signal (28) of the piezo-electric transducer (10, 22) is fed to a voltage-follower (impedance matching) to extend the detection time or access time.

7. Method according to claim 2, wherein the signal is used to control or regulate the power of the electric motor of the vacuum cleaner.

8. Method according to claim 6, wherein the charge signal (28) is filtered to eliminate interferences (32) and that the filtered signal (34) is afterwards converted to a peak signal (36) which is used to control or regulate the vacuum cleaner.

9. Application of the method according to claim 1 to control or regulate the suction power of a vacuum cleaner.

10. Vacuum cleaner with at least one piezo-electric transducer (10, 22) and with at least one indicating device (39) for qualitative and/or quantitative indication of a charge signal (28) generated by a piezo-electric transducer (10, 22), wherein the piezo-electric transducer (10, 22) is located on the interior of a suction duct (12, 24) and exposed to at least one part of a two-phase-flow, and that an elastic intermediate layer is located between the piezo-electric transducer (10, 22) and the suction duct (12, 24).

11. Vacuum cleaner according to claim 10, wherein the piezo-electric transducer (10, 22) in the interior of the suction duct (12, 24) is arranged at an oblique angle to the direction of flow (14).

12. Vacuum cleaner according to claim 10 or 11, wherein the piezo-electric transducer (10, 22) is located within a narrowing (23) of the suction duct (12, 24).

13. Vacuum cleaner according one of the claims 10 to 12, wherein the piezo-electric transducer (10, 22) is a foil (26).

14. Vacuum cleaner according to one of the claims 10 to 13, wherein the piezo-electric transducer (10, 22) is a crystal (21).

15. Vacuum cleaner according to one of the claims 10 to 14, comprising a measuring circuit (18) for processing the signal (28).

16. Vacuum cleaner according to claim 15, wherein the measuring circuit (18) includes a high-frequency-pass filter unit (33) for filtering the charge-signal (28) as well as a peak detector (35) for determining a peak signal (36).

17. Vacuum cleaner according to one of the claims 10 to 16, wherein the suction power is controlable in dependance on the charge signal (28).

## Revendications

1. méthode pour détecter des particules dans un écoulement diphasique, en particulier pour détecter de la poussière dans l'air, en exposant un transducteur piézo-électrique (10, 22) à au moins une partie de l'écoulement diphasique et en générant un signal (28) dépendant du nombre et/ou de la nature des particules à détecter, méthode caractérisée en ce que le transducteur piézo-électrique (10, 22) est disposé à l'intérieur d'un tuyau d'aspiration (12, 24) de maniere à ce que le transducteur piézo-électrique (10, 22) est exposé directement aux particules et que les particules cèdent au moins une partie de leur énergie cinétique au transducteur piézo-électrique (10, 22).

2. méthode selon la revendication 1, caractérisée en ce que que le signal généré est indiqué de façon optique et/ou acoustique et/ou tactile.

3. méthode selon les revendications 1 ou 2, caractérisée en ce que le signal est prétraité avant d'être indiqué.

4. méthode selon une des revendications 1 à 3, caractérisée en ce que le signal est filtré (34) pour éliminer des signaux parasites (32), en particulier ceux dûs au mesurage.

5. méthode selon une des revendications 1 à 4, caractérisée en ce que le signal filtré (34) est transformé en signal d'amplitude maximale (36) celui-ci étant conduit à un dispositif d'indication (39) pour une indication qualitative et/ou quantitative.

6. méthode selon une ou plusieurs des revendications 1 à 5, caractérisée en ce que le signal de charge (28) du transducteur piézo-électrique (10, 22) est conduit à un transformateur d'adaptation d'impédance (29) afin de prolonger le temps d'activité ou respectivement le temps d'accès.

7. méthode selon la revendication 2, caractérisée en ce que le signal est utilisé pour le réglage et la commande de la puissance du moteur de l'aspirateur.

8. méthode selon la revendication 6, caractérisée en ce que le signal de charge (28) est filtré (34) pour éliminer des signaux parasites (32) et que, par suite, le signal filtré (34) est transformé en signal d'amplitude maximale (36) celui-ci étant utilisé pour le réglage ou la commande de l'aspirateur.

9. Utilisation de la méthode selon la revendication 1 pour le réglage ou la commande de la puissance d'aspiration de l'aspirateur.

10. Aspirateur muni au moins d'un transducteur piézo-électrique (10, 22) et muni en outre au moins d'un dispositif d'indication (39) pour l'indication qualitative et/ou quantitative d'un signal (28) généré par le transducteur piézo-électrique (10, 22), caractérisé en ce que le transducteur piézo-électrique (10, 22) est disposé à l'intérieur d'un tuyau d'aspiration (12, 24) et exposé à au moins une partie d'un écoulement diphasique et qu'une élastique couche intermédiaire d'amortissement est disposée entre le transducteur piézo-électrique (10, 22) et le tuyau d'aspiration (12, 24).

11. Aspirateur selon la revendication 10, caractérisé en ce que le transducteur piézo-électrique (10, 22) est disposé dans le tuyau d'aspiration (12, 24) obliquement au sens d'écoulement (14).

12. Aspirateur selon une des revendications 10 ou 11, caractérisé en ce que le transducteur piézo-électrique (10, 22) est disposé dans un rétreint (23) du tuyau d'aspiration (12, 24).

13. Aspirateur selon une des revendications 10 à 12, caractérisé en ce que le transducteur piézo-électrique (10, 22) est une feuille (26).

14. Aspirateur selon une des revendications 10 à 13, caractérisé en ce que le transducteur piézo-électrique (10, 22) est un cristal (21).

15. Aspirateur selon une des revendications 10 à 14, caractérisé par des connexions de mesure (18) pour traiter le signal (28).

16. Aspirateur selon la revendication 15, caractérisé en ce que les connexions de mesure (18) comportent un filtre passe-haut (33) pour filtrer le signal de charge (28) ainsi qu'un indicateur d'amplitude maximale (35) pour déterminer un signal d'amplitude maximale (36).

17. Aspirateur selon une des revendications 10 à 16, caractérisé par une puissance d'aspiration réglable en fonction du signal de charge (28).
